# EUROPEAN PATENT APPLICATION

(11) **EP 3 517 589 A1**
(43) Date of publication of application: **31.07.2019**
(21) Application number: 17853117.4
(22) Date of filing: 21.09.2017
(51) Int. Cl.: C09K 3/00, B01J 20/26, C02F 1/28, C02F 1/58

(54) **CHLORINE NEUTRALIZER, INJECTION-TYPE CHLORINE NEUTRALIZER USING SAME, CHLORINE NEUTRALIZING DEVICE AND CHLORINE NEUTRALIZING METHOD**

(30) Priority: 23.09.2016 JP 2016185874; 15.09.2017 JP 2017177212
(71) Applicant: Mie University, Tsu-shi, Mie 514-8507 (JP); Kuraray Kuraflex Co., Ltd., Okayama-shi, Okayama 702-8045 (JP)
(72) Inventor: FUKUZAKI, Satoshi, Tsu-shi Mie (JP); ARAIDA, Yasurou, Osaka-shi Osaka 530-8611 (JP); YOKOMIZO, Masako, Okayama-shi Okayama 702-8045 (JP)
(74) Representative: Vossius & Partner Patentanwälte Rechtsanwälte mbB
(86) International application number: PCT/JP2017/034057
(87) International publication number: WO 2018/056348

(57) **Abstract**

A chlorine neutralizer which can be used and manufactured in a simplified manner, a throw-in type chlorine neutralizer containing the same, a chlorine neutralizing apparatus, and a chlorine neutralizing method are provided. A chlorine neutralizer which neutralizes a chlorine-based component contains at least one selected from a vinyl alcohol based polymer and a polyamide resin, and the vinyl alcohol based polymer contains at least vinyl alcohol in a repeating structural unit.

## Description

### TECHNICAL FIELD

The present invention relates to a chlorine neutralizer, a throw-in type chlorine neutralizer containing the same, a chlorine neutralizing apparatus, and a chlorine neutralizing method.

### BACKGROUND ART

Sodium hypochlorite is used for cleaning, disinfection, bleach, or deodorization in various industries. An aqueous solution obtained by dissolving sodium hypochlorite in water is used as a safe and inexpensive chlorine-based disinfectant, and it is used, for example, as being thrown into water supply and sewage as well as water in a swimming pool. In a kitchen, such an aqueous solution is used, for example, as being thrown into water together with an object to be sterilized and disinfected.

Residual chlorine contained in water sterilized and disinfected by a chlorine-based disinfectant may react with an organic substance to produce trihalomethane or the like, or may have a deleterious effect such as interference of branchial respiration of water creatures such as fish. Therefore, there is a concern about influence on an environment by direct draining of water (liquid waste) containing residual chlorine at a high concentration. It has been known to neutralize (remove) residual chlorine before draining of water containing residual chlorine at a high concentration by addition of a reducing agent such as sodium thiosulfate, a contact method which is combination of a decomposition catalyst such as a metal oxide or activated carbon with a membrane filtration method, and use of a neutralizer containing a zinc oxide based solid solution as an active component (for example, Japanese Patent Laying-Open No. 2002-121537 (PTL 1)).

In the field of a filtering material such as a hollow fiber membrane, a chlorine-resistant polyolefin hollow fiber membrane to be used for treatment of a liquid containing a disinfectant which generates free chlorine such as sodium hypochlorite (for example, Japanese Patent Laying-Open No. 2006-205003 (PTL 2)), a polyvinylidene fluoride hollow fiber membrane to be used for removing turbidity of water (for example, Japanese Patent Laying-Open No. 2011-11211 (PTL 3)), and a water purifier to be used for removing chlorine contained in tap water or the like (for example, Japanese Patent Laying-Open No. 2006-281216 (PTL 4)) have been known.

PTL 2 describes a polyolefin hollow fiber membrane which achieves improved resistance against chlorine by attaching a copolymer such as an ethylene-vinyl alcohol copolymer to inner surfaces in pores in the polyolefin hollow fiber membrane. PTL 3 describes a hollow fiber membrane high in strength, high in pressure resistance, and excellent in resistance against staining obtained by coating a surface of a polyvinylidene fluoride hollow fiber membrane with an ethylene-vinyl alcohol copolymer. PTL 4 describes that an ethylene-vinyl alcohol copolymer may be used for making a porous hollow fiber membrane hydrophilic, the porous hollow fiber membrane representing one of filtering materials to be used for a water purifier.

### CITATION LIST

### PATENT LITERATURE

PTL 1: Japanese Patent Laying-Open No. 2002-121537
PTL 2: Japanese Patent Laying-Open No. 2006-205003
PTL 3: Japanese Patent Laying-Open No. 2011-11211
PTL 4: Japanese Patent Laying-Open No. 2006-281216

### SUMMARY OF INVENTION

### TECHNICAL PROBLEM

An object to be neutralized in the case of use of the chlorine-based disinfectant described above includes not only waste water but also a chlorine-based component which is attached to or remains in various facilities and equipment (machines, apparatuses, and instruments) for which the chlorine-based disinfectant was used. Specifically, droplets which are attached to and remain in facilities and equipment, a chlorine-based component which has permeated into equipment made of rubber or a resin, and fine mist of a chlorine-based disinfectant or volatile hypochlorous acid which floats in an indoor space in which a chlorine-based disinfectant was used should also neutralized. In neutralizing such various objects, the conventional neutralizing method is not necessarily applicable in a simplified and cost-efficient manner.

For example, in a method of removing a chlorine compound by neutralizing the same with sodium thiosulfate, an amount of sodium thiosulfate to be used should be controlled with respect to a concentration of residual chlorine.

The neutralizer described in PTL 1 is used by blending a zinc oxide based solid solution into a resin film or fibers. Therefore, the neutralizer should be mixed with a resin as a material for a resin film or fibers and then formed after the zinc oxide based solid solution is manufactured. Since the number of steps in manufacturing a neutralizer tends to increase, the neutralizer is not cost-efficient.

None of PTLs 1 to 4 describe use of at least one selected from an ethylene-vinyl alcohol copolymer and a polyamide resin as a neutralizer of residual chlorine.

An object of the present invention is to provide a novel chlorine neutralizer which can be used and manufactured in a simplified manner, a throw-in type chlorine neutralizer containing the same, a chlorine neutralizing apparatus, and a chlorine neutralizing method.

### SOLUTION TO PROBLEM

The present invention is directed to a chlorine neutralizer, a throw-in type chlorine neutralizer containing the same, a chlorine neutralizing apparatus, and a chlorine neutralizing method below.
[1] A chlorine neutralizer which neutralizes a chlorine-based component, wherein the chlorine neutralizer comprises at least one selected from a vinyl alcohol based polymer and a polyamide resin, and the vinyl alcohol based polymer contains at least vinyl alcohol in a repeating structural unit.
[2] The chlorine neutralizer described in [1], wherein the chlorine neutralizer comprises the vinyl alcohol based polymer, and the vinyl alcohol based polymer contains at least vinyl alcohol in the repeating structural unit.
[3] The chlorine neutralizer described in [2], wherein the chlorine-based component is contained in a liquid containing a chlorine-based treatment agent.
[4] The chlorine neutralizer described in [2] or [3], wherein the chlorine neutralizer contains at least 30 mass % of the vinyl alcohol based polymer with respect to a total mass of all components of the chlorine neutralizer.
[5] The chlorine neutralizer described in any of [2] to [4], wherein the vinyl alcohol based polymer is one type or two types of an ethylene-vinyl alcohol copolymer and a vinyl alcohol polymer.
[6] The chlorine neutralizer described in [1], wherein the chlorine neutralizer comprises the polyamide resin.
[7] The chlorine neutralizer described in [6], wherein the chlorine-based component is contained in a liquid containing a chlorine-based treatment agent.
[8] The chlorine neutralizer described in [6] or [7], wherein the chlorine neutralizer contains at least 30 mass % of the polyamide resin with respect to a total mass of all components of the chlorine neutralizer.
[9] The chlorine neutralizer described in any of [6] to [8], wherein the polyamide resin is aliphatic polyamide.
[10] The chlorine neutralizer described in [9], wherein the aliphatic polyamide is at least one selected from nylon 6 and nylon 6,6.
[11] The chlorine neutralizer described in any of [1] to [10], wherein the chlorine neutralizer is in a form of at least one selected from the group consisting of particles, a film, a porous body, a fiber, a non-woven fabric, a fabric, and a knit.
[12] The chlorine neutralizer described in any of [1] to [11], wherein the chlorine neutralizer is in a form of a sealed body sealed in a case with a hole through which the chlorine-based component can pass.
[13] A throw-in type chlorine neutralizer comprising the chlorine neutralizer described in any of [1] to [12].
[14] A chlorine neutralizing apparatus comprising the chlorine neutralizer described in any of [1] to [13].
[15] The chlorine neutralizing apparatus described in [14], wherein the chlorine neutralizing apparatus is a filtering material or an adsorbent.
[16] A chlorine neutralizing method of neutralizing a chlorine-based component, the chlorine neutralizing method comprising neutralizing the chlorine-based component by bringing the chlorine-based component and a vinyl alcohol based polymer in contact with each other, the vinyl alcohol based polymer containing at least vinyl alcohol in a repeating structural unit.
[17] The chlorine neutralizing method described in [16], wherein the chlorine-based component and the vinyl alcohol based polymer are brought in contact with each other by exposing the vinyl alcohol based polymer to an environment containing the chlorine-based component or by introducing the chlorine-based component into the vinyl alcohol based polymer.
[18] A chlorine neutralizing method of neutralizing a chlorine-based component, the chlorine neutralizing method comprising neutralizing the chlorine-based component by bringing the chlorine-based component and a polyamide resin in contact with each other.
[19] The chlorine neutralizing method described in [18], wherein the chlorine-based component and the polyamide resin are brought in contact with each other by exposing the polyamide resin to an environment containing the chlorine-based component or by introducing the chlorine-based component into the polyamide resin.

### ADVANTAGEOUS EFFECTS OF INVENTION

According to the present invention, a chlorine neutralizer which can be used and manufactured in a simplified manner, a throw-in type chlorine neutralizer containing the same, a chlorine neutralizing apparatus, and a chlorine neutralizing method can be provided.

### BRIEF DESCRIPTION OF DRAWINGS

Fig. 1 is a diagram showing a chlorine neutralization effect of a chip containing an ethylene-vinyl alcohol copolymer in Example 1.
Fig. 2 is a diagram showing a chlorine neutralization effect of a film of an ethylene-vinyl alcohol copolymer in Example 2.
Fig. 3 is a diagram showing a chlorine neutralization effect of a core-clad fiber containing an ethylene-vinyl alcohol copolymer in a clad structure in Example 3.
Fig. 4 is a diagram showing a chlorine neutralization effect of a melt blown non-woven fabric containing an ethylene-vinyl alcohol copolymer in Example 4.
Fig. 5 is a diagram showing a chlorine neutralization effect of a chip containing a vinyl alcohol polymer in Example 5.
Fig. 6 is a diagram showing a chlorine neutralization effect of a core-clad fiber containing an ethylene-vinyl alcohol copolymer in a clad structure in Example 6.
Fig. 7 is a diagram showing a chlorine neutralization effect of a core-clad fiber containing an ethylene-vinyl alcohol copolymer in a clad structure in Example 7.
Fig. 8 is (a) a diagram showing a chlorine neutralization effect of a rayon non-woven fabric in Comparative Example 1 and (b) a diagram showing a chlorine neutralization effect of a polyethylene terephthalate non-woven fabric in Comparative Example 2.
Fig. 9 is a diagram showing a chlorine neutralization effect of a melt blown non-woven fabric containing a polyamide resin in Example 2-1.
Fig. 10 is a diagram showing a chlorine neutralization effect of a film containing a polyamide resin in Example 2-2.

### DESCRIPTION OF EMBODIMENTS

The present inventors have found that a rate of consumption of a chlorine-based component is extremely higher when the chlorine-based component is brought in contact with a vinyl alcohol based polymer or a polyamide resin than when a general-purpose resin other than the former is used. The present invention uses a vinyl alcohol based polymer or a polyamide resin as a novel chlorine neutralizer based on this finding.

An amount of use of a chlorine neutralizer in the present invention does not have to strictly be controlled in neutralizing a chlorine-based component, and the chlorine neutralizer can be used as being formed into a formed body such as a film or a fiber as will be described below, and can safely be used and manufactured in a simplified manner.

### <Chlorine Neutralizer>

A chlorine neutralizer neutralizes oxidizing power of a chlorine-based component. "Neutralization" herein encompasses not only chemical reaction between a chlorine neutralizer and a chlorine-based component but also inactivation of efficacy, for example, in disinfection, sterilization, cleaning, bleach, and deodorization achieved by the chlorine-based component.

### (Chlorine Neutralizer 1: Vinyl Alcohol Based Polymer)

A chlorine neutralizer contains a vinyl alcohol based polymer as an effective component, and a vinyl alcohol based polymerized product contains at least vinyl alcohol in a repeating structural unit. The vinyl alcohol based polymer should only contain vinyl alcohol in a repeating structural unit, and may contain a copolymerization component copolymerizable with vinyl alcohol in a repeating structural unit. A copolymerization component is not particularly limited, and examples thereof include α olefin such as ethylene or propylene, vinyl chloride, and butenediol, and among these, ethylene is preferred.

Though a ratio of copolymerization between vinyl alcohol and a copolymerization component is not particularly limited, a content of the copolymerization component in a vinyl alcohol based polymer is preferably not lower than 10 mol % and more preferably not lower than 20 mol %, and preferably not higher than 65 mol % and more preferably not higher than 50 mol %. In a range of contents from 10 mol % to 65 mol %, as a content of the copolymerization component in the vinyl alcohol based polymer is higher, a chlorine neutralization effect can be improved.

Specifically, a homopolymer of vinyl alcohol (PVOH), an ethylene-vinyl alcohol copolymer (EVOH), a propylene-vinyl alcohol based polymer, a vinyl acetate-vinyl alcohol copolymer, and a butenediol-vinyl alcohol copolymer represent examples of the vinyl alcohol based polymer. Among these, a homopolymer of vinyl alcohol and an ethylene-vinyl alcohol copolymer are preferred. In using an ethylene-vinyl alcohol copolymer, a content of ethylene is preferably from 25 mol % to 60 mol %, more preferably from 30 mol % to 55 mol %, and further preferably from 35 mol % to 50 mol % from a point of view of a reaction speed.

A content of the vinyl alcohol based polymer in the chlorine neutralizer is preferably not lower than 30 mass %, more preferably not lower than 40 mass %, and most preferably not lower than 50 mass % with respect to a total mass of all components of the chlorine neutralizer. The chlorine neutralizer may contain a component other than the vinyl alcohol based polymer. Examples of other components to be contained in the chlorine neutralizer include a polymer such as polyester, polyolefin, cellulose, and acrylic ester other than the vinyl alcohol based polymer as well as an inorganic substance such as glass, ceramics, and a metal.

The chlorine neutralizer is preferably in a form of particles, a film, a porous body, a fiber, a non-woven fabric, a fabric, or a knit. When the chlorine neutralizer is in a form of particles, the particle should only be in a shape of a sphere, an oval sphere, a cylindroid, a pellet, or a chip having a particle size from 1 mm to 10 mm. When the chlorine neutralizer is in a form of a film, it may be formed into a prescribed size or into an elongated material, for example, as being rolled like a roll. When the chlorine neutralizer is in a form of a porous body, the vinyl alcohol based polymer should only be foam molded.

When the chlorine neutralizer is in a form of a fiber (including a raw stock and a yarn), it may be in a form of a fiber composed only of a polyvinyl alcohol based polymer or a composite fiber of a polyvinyl alcohol based polymer and another polymer as being combined. A structure of the composite fiber is not particularly limited, and it may be a core-clad structure, a side-by-side structure, a splittable structure, and a sea-island structure. The polyvinyl alcohol based polymer is preferably arranged on a surface of a composite fiber. Specifically, a polyvinyl alcohol based polymer is preferably arranged on a clad structure in an example of the core-clad structure and arranged on a sea structure in an example of the sea-island structure. A fibrous chlorine neutralizer is thus readily in contact with a chlorine-based component and a chlorine neutralization effect is readily exhibited. Though a diameter of the fiber is not particularly limited, normally, the fiber diameter is preferably from 0.1 µm to 50 µm and more preferably from 1 µm to 20 µm. Since a specific surface area increases with decrease in fiber diameter, the chlorine neutralization effect can be improved. A fiber smaller than 1 µm, however, is low in dynamic physical properties and also in productivity, and hence a moderately small fiber diameter is preferred.

A non-woven fabric, a fabric, or a knit serving as the chlorine neutralizer should only be fabricated by using a fiber or a yarn containing a polyvinyl alcohol based polymer. A non-woven fabric is not particularly limited, and examples thereof include a melt blown non-woven fabric, a spunbond non-woven fabric, an airlaid non-woven fabric, a thermally bonded non-woven fabric, a spunlace non-woven fabric, a needle punched non-woven fabric, and a chemically bonded non-woven fabric. Among these, a melt blown non-woven fabric small in diameter of fibers forming the non-woven fabric and large in specific surface area is preferred. A structure of a fabric or a knit is not particularly limited either, and a yarn obtained by spinning a polyvinyl alcohol based polymer should only be used for weaving or knitting into any structure.

A formed body of the chlorine neutralizer is preferably in a form that achieves a large specific surface area, and a film, a porous body, a fiber, a non-woven fabric, a fabric, or a knit is preferred. By increasing a specific surface area of the formed body of the chlorine neutralizer, an area of contact with a chlorine-based component can be increased and the chlorine neutralization effect can be improved.

A vinyl alcohol based polymer is preferably arranged on an outer surface of the chlorine neutralizer such that the formed body of the chlorine neutralizer and the chlorine-based component are in contact with each other to be able to efficiently neutralize the chlorine-based component. In using the chlorine neutralizer for a chlorine-based component contained in a liquid, a polyvinyl alcohol based polymer is preferably arranged by a thickness from 1 µm to 10 µm on a surface of the formed body of the chlorine neutralizer, because a liquid containing the chlorine-based component permeates from the surface of the formed body of the chlorine neutralizer into the inside. For example, in forming a chlorine neutralizer having a layered structure of two or more layers, an outer layer thereof may be formed of a vinyl alcohol based polymer and an inner layer thereof may be formed of a compound such as an inorganic substance or a resin other than the vinyl alcohol based polymer.

### (Chlorine Neutralizer 2: Polyamide Resin)

The chlorine neutralizer contains a polyamide resin. The polyamide resin includes an amide bond (-CONH-) in a main chain, and examples thereof include a polyamide resin containing at least one type of a resin selected from aliphatic polyamide, alicyclic polyamide, aromatic polyamide, and a polymer which is combination thereof. A single type of monomer unit or two or more types of monomer units may constitute the polyamide resin.

The polyamide resin in the present invention is preferably aliphatic polyamide or aromatic polyamide, and more preferably aliphatic polyamide. A single type of polyamide may be used alone for the polyamide resin, or two or more types of polyamide may be used as being mixed. Furthermore, copolymerized polyamide composed of combination of constituent monomers of two or more types of polyamide can be used.

Aliphatic polyamide is not particularly limited so long as it is a polymer containing an aliphatic compound having an amide bond in a main chain as a constituent unit. Examples of aliphatic polyamide include polycaproamide (nylon-6), poly-co-aminoheptanoic acid (nylon-7), polyundecaneamide (nylon-11), polyethylenediamine adipamide (nylon-2,6), polytetramethylene adipamide (nylon-4,6), polyhexamethylene adipamide (nylon-6,6), polyhexamethylene sebacamide (nylon-2,10), polyhexamethylene dodecamide (nylon-6,12), polyoctamethylene adipamide (nylon-8,6), polydecamethylene adipamide (nylon-10,6), and polydodecamethylene sebacamide (nylon-10,8), as well as a caprolactam/laurinlactam copolymer (nylon-6/12), a caprolactam/ω-aminononanoic acid copolymer (nylon-6/9), a caprolactam/hexamethylene adipate copolymer (nylon-6/6,6), a laurinlactam/hexamethylenediamine adipate copolymer (nylon-12/6,6), a hexamethylenediamine adipate/hexamethylenediamine sebacate copolymer (nylon-6,6/6,10), an ethylenediamine adipate/hexamethylenediamine adipate copolymer (nylon-2,6/6,6), and a caprolactam/hexamethylenediamine adipate/hexamethylenediamine sebacate copolymer (nylon-6,6/6,10).

Examples of aromatic polyamide include a polymer containing aromatic dicarboxylic acid such as terephthalic acid and diamine as constituent units. Examples of diamine include: aliphatic diamine such as ethylenediamine, propylenediamine, 1,4-butanediamine, 1,6-hexanediamine, 1,8-octanediamine, 1,10-decanediamine, 1,12-dodecanediamine, 2-methyl-1,5-pentanediamine, 3-methyl-1,5-pentanediamine, 2,2,4-trimethyl-1,6-hexanediamine, 2,4,4-trimethyl-1,6-hexanediamine, 2-methyl-1,8-octanediamine, 1,9-nonanediamine, and 5-methyl-1,9-nonanediamine; alicyclic diamine such as cyclohexanediamine, methylcyclohexanediamine, and isophoronediamine; and aromatic diamine such as p-phenylenediamine, m-phenylenediamine, xylilenediamine, xylenediamine, 4,4'-diaminodiphenylmethane, 4,4'-diaminodiphenyl sulfone, and 4,4'-diaminodiphenyl ether.

Among these, the polyamide resin in the present invention is preferably at least one selected from nylon 6 and nylon 6,6.

A content of the polyamide resin in the chlorine neutralizer is preferably not lower than 30 mass %, more preferably not lower than 40 mass %, and most preferably not lower than 50 mass % with respect to a total mass of all components of the chlorine neutralizer. The chlorine neutralizer may contain a component other than the polyamide resin. Examples of other components to be contained in the chlorine neutralizer include a polymer such as polyester, polyolefin, cellulose, acrylic ester, and vinyl alcohol other than the polyamide resin as well as an inorganic substance such as glass, ceramics, and a metal.

The chlorine neutralizer is preferably in a form of particles, a film, a porous body, a fiber, a non-woven fabric, a fabric, or a knit. When the chlorine neutralizer is in a form of particles, the particle should only be in a shape of a sphere, an oval sphere, a cylindroid, a pellet, and a chip having a particle size from 1 mm to 10 mm. When the chlorine neutralizer is in a form of a film, it may be formed into a prescribed size or into an elongated material, for example, as being rolled like a roll. When the chlorine neutralizer is in a form of a porous body, the polyamide resin should only be foam molded.

When the chlorine neutralizer is in a form of a fiber or a non-woven fabric, manufacturing methods described, for example, in Japanese Patent Publication No. 7-96746 and WO2015/182088 can suitably be used. When the chlorine neutralizer is in a form of a fiber (including a raw stock and a yarn), it may be in a form of a fiber composed only of a polyamide resin or a composite fiber of a polyamide resin and another polymer as being combined. A structure of the composite fiber is not particularly limited, and it may be a core-clad structure, a side-by-side structure, a splittable structure, and a sea-island structure. The polyamide resin is preferably arranged on a surface of a composite fiber. Specifically, the polyamide resin is preferably arranged on a clad structure in an example of the core-clad structure and arranged on a sea structure in an example of the sea-island structure. A fibrous chlorine neutralizer is thus readily in contact with the chlorine-based component and a chlorine neutralization effect is readily exhibited. Though a diameter of the fiber is not particularly limited, normally, the fiber diameter is preferably from 0.1 µm to 50 µm and more preferably from 1 µm to 20 µm. Since a specific surface area increases with decrease in fiber diameter, the chlorine neutralization effect can be improved. A fiber smaller than 1 µm, however, is lower in dynamic physical properties and also in productivity, and hence a moderately small fiber diameter is preferred.

A non-woven fabric, a fabric, or a knit serving as the chlorine neutralizer should only be fabricated by using a fiber or a yarn containing a polyamide resin. A non-woven fabric is not particularly limited and examples thereof include a melt blown non-woven fabric, a spunbond non-woven fabric, an airlaid non-woven fabric, a thermally bonded non-woven fabric, a spunlace non-woven fabric, a needle punched non-woven fabric, and a chemically bonded non-woven fabric. Among these, a melt blown non-woven fabric small in diameter of fibers forming the non-woven fabric and large in specific surface area is preferred. A structure of a fabric or a knit is not particularly limited either, and a yarn obtained by spinning a polyamide resin should only be used for weaving or knitting into any structure.

A formed body of the chlorine neutralizer is preferably in a form that achieves a large specific surface area, and a film, a porous body, a fiber, a non-woven fabric, a fabric, or a knit is preferred. By increasing a specific surface area of the formed body of the chlorine neutralizer, an area of contact with a chlorine-based component can be increased and the chlorine neutralization effect can be improved.

A polyamide resin is preferably arranged on an outer surface of the chlorine neutralizer such that the chlorine neutralizer and the chlorine-based component are in contact with each other to be able to efficiently neutralize the chlorine-based component. In using the chlorine neutralizer for a chlorine-based component contained in a liquid, a polyamide resin is preferably arranged by a thickness from 1 µm to 10 µm on a surface of the formed body of the chlorine neutralizer, because a liquid containing the chlorine-based component permeates from the surface of the formed body of the chlorine neutralizer into the inside. For example, in forming the chlorine neutralizer having a layered structure of two or more layers, an outer layer thereof may be formed of a polyamide resin and an inner layer may be formed of a compound such as a resin other than the polyamide resin or an inorganic substance.

### <Chlorine-Based Component>

Examples of the chlorine-based component include not only free residual chlorine (HClO, ClO⁻, Cl₂) derived from a chlorine-based treatment agent or bonded residual chlorine (chloramine) but also Cl₂ or HClO volatized into air and chlorine dioxide.

The chlorine-based treatment agent exhibits efficacy in disinfection, sterilization, cleaning, bleach, and deodorization (which are referred to as "disinfection etc." below) owing to effective chlorine. Effective chlorine refers to a chlorine compound having efficacy in disinfection etc. and examples thereof include HClO, ClO⁻, and chloramine. For example, hypochlorous acid, sodium hypochlorite, calcium hypochlorite, chlorine dioxide, liquid chlorine, and a solution obtained by dissolving at least one of the former in water can be used as the chlorine-based treatment agent. The chlorine-based treatment agent may be used as being added to water and a liquid such as an aqueous medium mainly composed of water and containing a component miscible with water, or may be used as being volatilized into air. The liquid includes water and an aqueous medium to be subjected to disinfection etc. or water and an aqueous medium applied to an object subjected to disinfection etc. A main component refers to a component highest in content (parts by mass) of components of a liquid.

### <Form of Use of Chlorine Neutralizer>

The chlorine neutralizer neutralizes a chlorine-based component by being brought in contact with the chlorine-based component. The chlorine neutralizer and the chlorine-based component may be brought in contact with each other by exposing the chlorine neutralizer to an environment containing the chlorine-based component or by introducing the chlorine-based component into the chlorine neutralizer.

The chlorine neutralizer can be used by being exposed to an environment containing the chlorine-based component by directly introducing the chlorine neutralizer as a throw-in type chlorine neutralizer. Examples of the environment containing the chlorine-based component include a liquid and waste thereof containing a chlorine-based component derived from a chlorine-based treatment agent or the like, a space such as a room in which mist containing a chlorine-based component derived from a chlorine-based treatment agent or the like or a volatilized substance of a chlorine-based component floats, an exhaust from various facilities, and the inside of equipment for manufacturing a weakly acidic aqueous solution of hypochlorous acid.

The throw-in type chlorine neutralizer may be in a form of particles, a film, a porous body, a fiber, a non-woven fabric, a fabric, or a knit as described above, or in a form of a coated body obtained by coating a surface of a core material formed of an inorganic substance such as glass, ceramics, or a metal or a resin with such a coating as a vinyl alcohol based polymer or a polyamide resin. The throw-in type chlorine neutralizer in a form of a film, a porous body, a non-woven fabric, a fabric, or a knit manufactured as an elongated material and rolled, for example, like a roll can also be used in such a manner that a necessary amount thereof is cut at the time of use, and the throw-in type chlorine neutralizer can thus be excellent in usability.

The chlorine neutralizer may be in a form of a sealed body in which a formed body or a coated body is sealed in a case with a hole through which a chlorine-based component can pass. Since an environment containing the chlorine-based component is an area filled with such a fluid as liquid or gas, the hole through which the chlorine-based component can pass should only have a size allowing passage of such a fluid. A case with a hole through which the chlorine-based component can pass is not particularly limited, and for example, the case should only be in a form of a sheet or a plate worked into a net or in a form of a bag or a box by using a non-woven fabric, a fabric, or a knit with pores or a film with pores.

By preparing the chlorine neutralizer as a formed body, a coated body, and a sealed body as such, chlorine neutralization treatment can be performed by such a simplified method as exposure to an environment containing a chlorine-based component. Since a used chlorine neutralizer can be collected by a simple operation to remove the formed body, the coated body, and the sealed body from the environment containing the chlorine-based component also after the chlorine neutralization treatment, the chlorine neutralizer excellent in handleability can be provided.

The chlorine neutralizer can be used also in a chlorine neutralizing apparatus. Examples of the chlorine neutralizing apparatus include a column, a filtering material such as a filter, a wiper, and an adsorbent. When the chlorine neutralizing apparatus is implemented as a column, a column main body should only be filled with particles or fibers of the chlorine neutralizer for use.

When the chlorine neutralizing apparatus is implemented as a filter, a chlorine-based component should only be introduced to the filter so as to pass therethrough. For example, the chlorine neutralizer itself in a form of a film, a porous body, a non-woven fabric, a fabric, or a knit can be used as the filter.

When the chlorine neutralizing apparatus is implemented as a filter, it can also be used in a form of a cartridge filter. In an example of the cartridge filter, a cartridge case can be filled with the chlorine neutralizer formed into particles, fibers, or a porous body for use. A cartridge filter may be provided by filling a cartridge case with a product obtained by rolling like a roll, a formed body in a form of a sheet, a product obtained by pleating a formed body in a form of a sheet, or a product obtained by layering formed bodies in a form of a disc-shaped sheet.

When the chlorine neutralizing apparatus is implemented as a wiper, for example, a non-woven fabric, a fabric, a knit, or a porous body like a sponge composed of the chlorine neutralizer can be used as the wiper. The wiper is used in such a manner as wiping off a chlorine-based component contained in an attachment or a residue which is attached to or remains in facilities or equipment in which a chlorine-based treatment agent was used or a chlorine-based component contained in a seepage which has permeated once into equipment made of rubber or a resin and thereafter seeped out of (transferred again from) the inside of the equipment. The chlorine-based component can thus be introduced into the wiper and neutralized.

When the chlorine neutralizing apparatus is implemented as the adsorbent, for example, particles, a porous body, fibers, and a non-woven fabric containing the chlorine neutralizer can be used as the adsorbent. The adsorbent can be used as being placed in a space such as a room where a chlorine-based component was used. As the chlorine-based component contained in mist or a volatilized component which floats in the space is taken into the adsorbent, the chlorine-based component can be neutralized.

### <Condition of Use of Chlorine Neutralizer>

In an example in which the chlorine neutralizer is composed of a vinyl alcohol based polymer, when the chlorine neutralizer is used in a liquid, it is preferably used under an acid condition from pH 2.0 to pH 6.5 in which a good chlorine neutralization effect tends to be obtained and more preferably used under a weakly acid condition from pH 5.0 to pH 6.5. When the chlorine neutralizer is used under an alkaline condition from pH 7.0 to pH 12.0, the chlorine neutralizer is used preferably together with a binder component such as acrylic ester.

In an example in which the chlorine neutralizer is composed of a polyamide resin, when the chlorine neutralizer is used in a liquid, it is preferably used under a condition from pH 2.0 to pH 10.0 in which a good chlorine neutralization effect tends to be obtained and more preferably used under a condition from pH 4.3 to pH 9.0. When the chlorine neutralizer is used under an alkaline condition from pH 10.0 to pH 12.0, the chlorine neutralizer is used preferably together with a binder component such as acrylic ester.

The chlorine neutralizer can suitably be used when a concentration of a chlorine-based component in a liquid is from 0.1 ppm to 5000 ppm and more suitably be used when the concentration thereof is from 0.1 ppm to 200 ppm. When the chlorine neutralizer is used within the concentration range above, the chlorine neutralizer is less likely to suffer from discoloration or deterioration and the chlorine neutralizer excellent in handleability can be provided.

Though an amount of use of the chlorine neutralizer is not particularly limited, preferably 1 g to 2000 g and more preferably 1 g to 200 g of the chlorine neutralizer is used when a concentration of a chlorine-based component in 1 L of an aqueous solution is from 0.1 ppm to 200 ppm.

### Examples

Though the present invention will be described below in further detail with reference to Examples, the present invention is not limited thereto.

### <Chlorine Neutralizer 1: Vinyl Alcohol Based Polymer>

### [Examples 1 to 7 and Comparative Examples 1 and 2]

### [Chlorine Neutralizer]

A component below was prepared as a chlorine neutralizer.

### - Example 1

Chip (in a form of a cylinder having a particle size (diameter) of 3 mm and a height of 5 mm) composed of an ethylene-vinyl alcohol copolymer (containing 44 mol % of ethylene)

### - Example 2

Film (having a thickness of 30 µm) composed of an ethylene-vinyl alcohol copolymer (containing 44 mol % of ethylene)

### - Example 3

Core-clad fiber (trademark "Sofista" manufactured by Kuraray Co., Ltd. (clad (50 mass %): ethylene-vinyl alcohol copolymer (containing 44 mol % of ethylene), core (50 mass %): polyethylene terephthalate having an average fiber diameter of 15 µm)

### - Example 4

Melt blown non-woven fabric (having an average fiber diameter of 4 µm and a weight per unit area of 50 g/m²) composed of an ethylene-vinyl alcohol copolymer

### - Example 5

Chip (in a form of a cylinder having a particle size (diameter) of 3 mm and a height of 5 mm) composed of a vinyl alcohol polymer

### - Example 6

Core-clad fiber (clad (50 mass %): ethylene-vinyl alcohol copolymer (containing 32 mol % of ethylene), core (50 mass %): polyethylene terephthalate having an average fiber diameter of 15 µm)

### - Example 7

Core-clad fiber (clad (50 mass %): ethylene-vinyl alcohol copolymer (containing 48 mol % of ethylene), core (50 mass %): polyethylene terephthalate having an average fiber diameter of 15 µm)

### - Comparative Example 1

Fibers composed of rayon (having an average fiber diameter of 13 µm)

### - Comparative Example 2

Fibers composed of polyethylene terephthalate (having an average fiber diameter of 12 µm)

### [Evaluation of Chlorine Neutralization Effect]

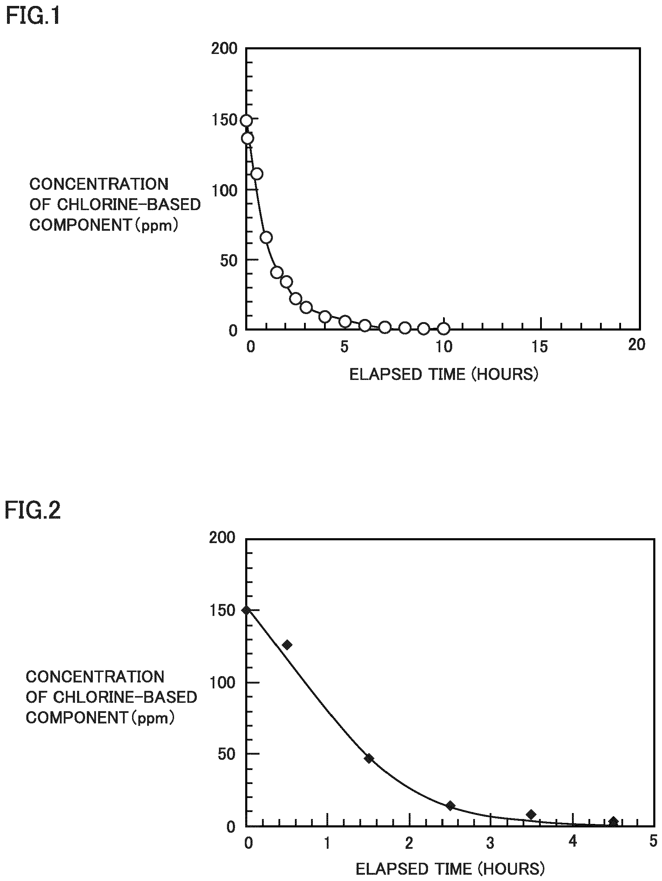

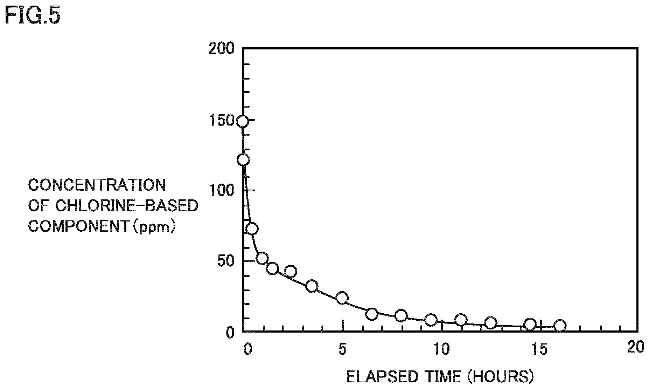

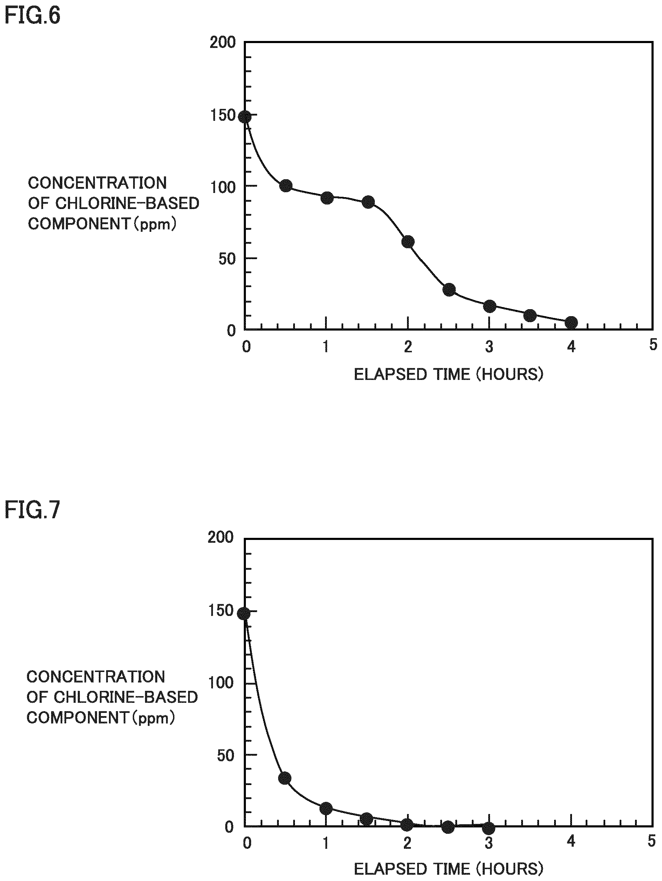

A hypochlorous acid aqueous solution at pH 6 containing hypochlorous acid at 186 ppm was adjusted. Two grams of chlorine neutralizer from which an oil solution had been removed by a masher was introduced in a beaker, and 100 mL of the hypochlorous acid aqueous solution was added. The entire beaker was shaded at a temperature of 20°C, the hypochlorous acid aqueous solution and the chlorine neutralizer were caused to react with each other, and a concentration of a chlorine-based component was measured by DPD colorimetric testing. Reaction between the hypochlorous acid aqueous solution and the chlorine neutralizer was caused under an agitation condition at 300 rpm in Examples 1, 2, and 5, and otherwise under a condition of being left stand. Based on variation over time in measured concentration of the chlorine-based component, a time period until the concentration of the chlorine-based component was equal to or lower than a lower limit value of a measurement limit was found as a chlorine consumption time. Table 1 shows results. Figs. 1 to 8 show variation over time in concentration of the chlorine-based component.

**Table 1**

| | Polymer | | Shape of Formed Body | Chlorine Consumption Time |
|---|---|---|---|---|
| | Type | Ethylene Content [mol %] | | |
| Example 1 | EVOH | 44 | Chip | 8 Hours |
| Example 2 | EVOH | 44 | Film | 4.5 Hours |
| Example 3 | Clad: EVOH | 44 (in clad component) | Core-Clad Fiber | 3 Hours |
| | Core: PET | | | |
| Example 4 | EVOH | 44 | Melt-Blown Non-Woven Fabric | 1.5 Hour |
| Example 5 | PVOH | - | Chip | 16 Hours |
| Example 6 | Clad: EVOH | 32 (in clad component) | Core-Clad Fiber | 4.0 Hours |
| | Core: PET | | | |
| Example 7 | Clad: EVOH | 48 (in clad component) | Core-Clad Fiber | 2.5 Hours |
| | Core: PET | | | |
| Comparative Example 1 | Rayon | - | Fiber | 14 Days |
| Comparative Example 2 | PET | - | Fiber | 14 Days and More |

| | | | | |
|---|---|---|---|---|
| EVOH: ethylene-vinyl alcohol copolymer PET: polyethylene terephthalate PVOH: vinyl alcohol polymer | | | | |

### [Review of Results]

As shown in Table 1 and Figs. 1 to 8, a chlorine consumption time was shorter when a vinyl alcohol based polymer was employed as the chlorine neutralizer (Examples 1 to 7) than when a polymer other than the vinyl alcohol based polymer was employed (Comparative Examples 1 and 2). It can be seen that the vinyl alcohol based polymer is higher in chlorine neutralization effect than other polymers. It can be seen in particular that the ethylene-vinyl alcohol copolymer is high in chlorine neutralization effect (Examples 1 and 5).

The chlorine consumption time was shorter when the vinyl alcohol based polymer was formed into fibers (Examples 3, 4, 6, and 7) than when the vinyl alcohol based polymer was formed into a chip or a film (Example 1). The chlorine consumption time was shorter when the vinyl alcohol based polymer was formed into a melt blown non-woven fabric small in fiber diameter (Example 4) than when the vinyl alcohol based polymer was formed into core-clad fibers (Examples 3, 6, and 7). Since a specific surface area of a formed body increases in the order of the chip, the core-clad fiber, and the melt blown non-woven fabric in the present Examples, it can be seen that the chlorine neutralization effect can be improved by forming the vinyl alcohol based polymer into a formed body large in specific surface area.

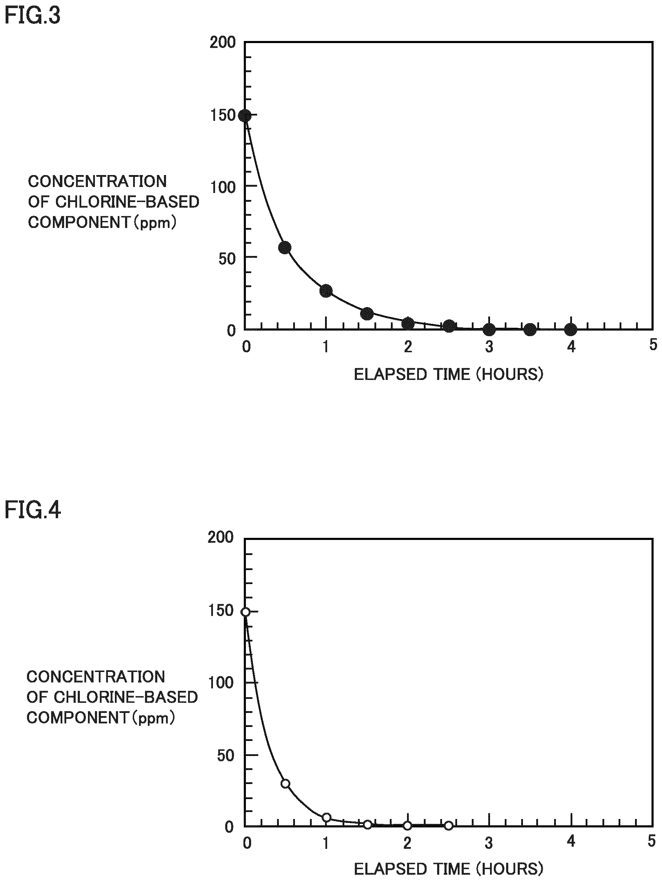

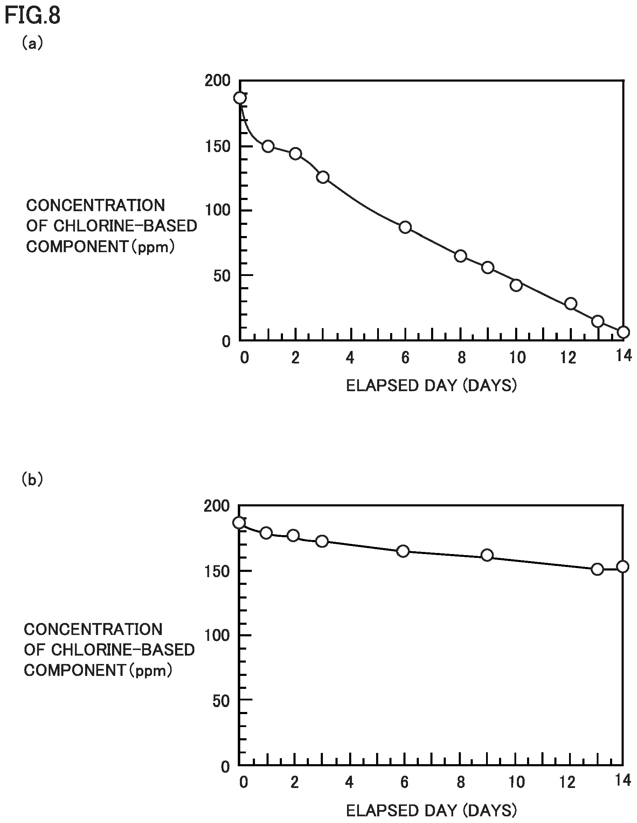

As shown in Fig. 3 and Table 1, when fibers containing the vinyl alcohol based polymer were employed, a concentration of the chlorine-based component rapidly lowered in several hours and was equal to or lower than the lower limit value of the measurement limit in three hours. As shown in Fig. 8 (a) and (b) and Table 1, when rayon fibers were employed (Fig. 8 (a)) on the other hand, fourteen days were required for the concentration of the chlorine-based component to be equal to or lower than the lower limit value of the measurement limit, and when polyethylene terephthalate fibers were employed (Fig. 8 (b)), the concentration of the chlorine-based component was not equal to or lower than the lower limit value of the measurement limit even after lapse of fourteen days.

### <Chlorine Neutralizer 2: Polyamide Resin>

### [Reaction Between Chlorine Neutralizer and Hypochlorous Acid Aqueous Solution]

Chlorine neutralizers in Examples 2-1 to 2-6 below were prepared. An oil solution was removed from 2 g of the chlorine neutralizer by using a masher and thereafter the chlorine neutralizer was caused to react with 100 mL of a hypochlorous acid aqueous solution. The entire beaker was shaded and left stand at 20°C for reaction. A concentration of a chlorine-based component (a concentration of free chlorine) was measured by DPD colorimetric testing.

### (Example 2-1)

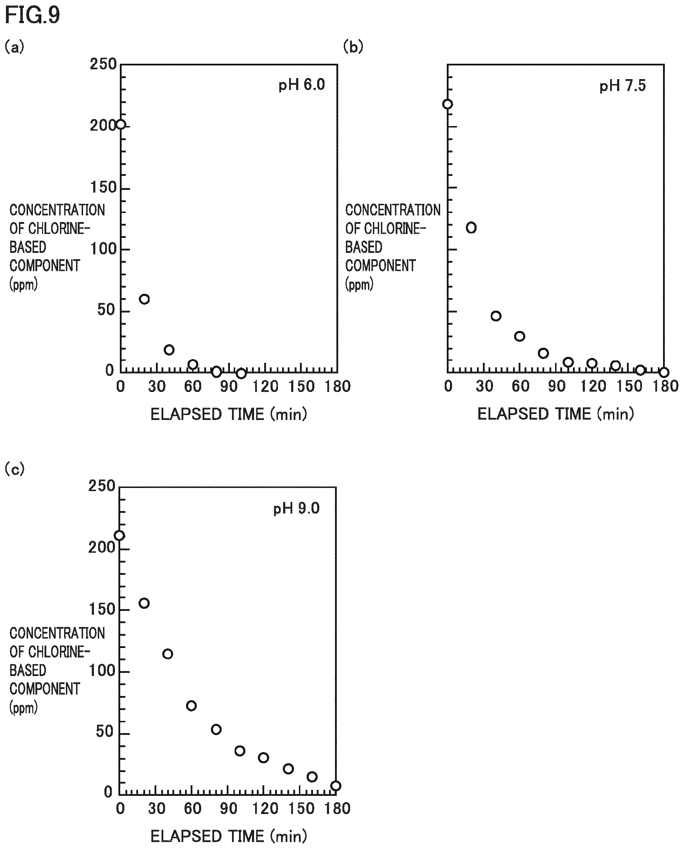

A melt blown non-woven fabric composed of nylon 6 (Kuraray Kuraflex Co., Ltd., NS0050 (trademark) having an average fiber diameter of 3.5 µm and a weight per unit area of 50 g/m²) was prepared as a chlorine-based neutralizer. A hypochlorous acid aqueous solution at pH 6.0, pH 7.5, or pH 9.0 containing hypochlorous acid at 200 ppm was prepared and caused to react with a chlorine neutralizer. Fig. 9 (a) to (c) shows variation over time in concentration of the chlorine-based component at each pH.

### (Example 2-2)

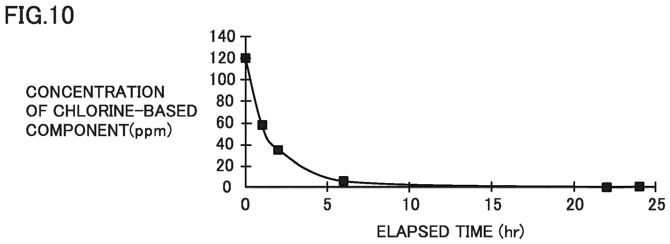

A film made of nylon 6 (Unitika Ltd., EMBLEM™, ONBC (grade), biaxially stretched nylon of both-side corona treated type having a thickness of 15 µm) was prepared as a chlorine-based neutralizer. A weakly acid hypochlorous acid aqueous solution at pH 4.3 containing hypochlorous acid at 120 ppm was prepared and caused to react with a chlorine neutralizer for 24 hours. Table 2 and Fig. 10 show variation over time in pH and concentration of a chlorine-based component.

### Table 2

**Table 2: Time Period for Which Nylon Film Was Left Stand and Concentration of Chlorine-Based Component**

| Elapsed Time (hr) | 0 | 1 | 2 | 6 | 22 | 24 |
|---|---|---|---|---|---|---|
| pH | 4.36 | 4.22 | - | - | 4.01 | 4.08 |
| Concentration of Chlorine-Based Component (ppm) | 120 | 58 | 35 | 6 | 0.21 | 0.76 |

### (Example 2-3)

A melt blown non-woven fabric identical to that in Example 1 was prepared as a chlorine-based neutralizer. A hypochlorous acid aqueous solution at pH 9.4 containing hypochlorous acid at 300 ppm was prepared and caused to react with a chlorine neutralizer. Table 3 shows a result of a concentration of a chlorine-based component when reaction proceeded until 335 hours.

### (Example 2-4)

Operations as in Example 2-3 were performed except for use of a raw stock composed of nylon 6 (Toray Industries, Inc., 1.7 dtex, having a fiber length of 51 mm) as a chlorine-based neutralizer. Table 3 shows results.

### (Example 2-5)

Operations as in Example 2-3 were performed except for use of a yarn composed of nylon 6 (Ube Exsymo Co., Ltd., "1015B", 180 dtex, 72 filaments) as a chlorine-based neutralizer. Table 3 shows results.

### (Example 2-6)

Operations as in Example 2-3 were performed except for use of a film identical to that in Example 2-2 as a chlorine-based neutralizer. Table 3 shows results.

### Table 3

**Table 3: Variation over Time in Concentration of Chlorine-Based Component (ppm)**

| Elapsed Time (hr) | 0 | 2 | 22 | 35 | 118 | 335 |
|---|---|---|---|---|---|---|
| Example 2-3 (MB Non-Woven Fabric) | 300 | 200 | 90 | 66 | 0 | 0 |
| Example 2-4 (Raw Stock) | 300 | 150 | 130 | 80 | 17 | 0 |
| Example 2-5 (Yarn) | 300 | 150 | 170 | 90 | 27 | 0 |
| Example 2-6 (Film) | 300 | 180 | 180 | 134 | 36 | 0 |

As shown in Fig. 9, in the melt blown non-woven fabric composed of nylon (nylon 6), lowering in concentration of the chlorine-based component was observed from immediately after reaction with the hypochlorous acid aqueous solution, and the concentration lowered to a value close to a detection limit value in approximately one hour to several hours. As shown in Table 2 and Fig. 10, lowering in concentration of the chlorine-based component was observed from immediately after reaction with the hypochlorous acid aqueous solution also in the film composed of nylon (nylon 6) and neutralization was completed in 22 hours. In contrast, when rayon fibers were employed (Fig. 8 (a)) as shown in Fig. 8, fourteen days were required until the concentration of the chlorine-based component was equal to or lower than the lower limit value of the measurement limit, and when polyethylene terephthalate fibers were employed (Fig. 8 (b)), the concentration of the chlorine-based component was not equal to or lower than the lower limit value of the measurement limit even after lapse of fourteen days.

It can be seen from the results above that, when a polyamide resin is employed as the chlorine neutralizer (Examples 2-1 and 2-2), time required for lowering in concentration of the chlorine-based component is shorter and the chlorine neutralization effect is higher than when a component other than the polyamide resin is employed (Comparative Examples 1 and 2).

As shown in Figs. 9 and 10, the melt blown non-woven fabric or the film composed of nylon exhibited the chlorine neutralization effect in a wide range from pH 4.3 (Table 2 and Fig. 10) to pH 9.0 (Fig. 9 (c)), that is, from a weakly acid condition to a weakly alkaline condition. It can be seen that a chlorine neutralizer containing nylon can be used for water to be treated of which pH may variously be varied depending on a chlorine treatment agent or other additives without pretreatment such as adjustment of pH, and it is extremely highly versatile.

As shown in Examples 2-3 to 2-6, the chlorine neutralization effect was observed in any example in which the chlorine neutralizer was prepared as a melt blown non-woven fabric, a raw stock, a yarn, and a film. Among these, the melt blown non-woven fabric was fastest, the raw stock and the yarn were substantially equal to each other, and the film was slower than the former, in lowering in concentration of the chlorine-based component. Since a specific surface area of the formed body increases in the order of the film, the fibers, and the melt blown non-woven fabric, it is expected that the chlorine neutralization effect can be improved by forming a polyamide resin into a formed body large in specific surface area.

It should be understood that the embodiment and test examples disclosed herein are illustrative and non-restrictive in every respect. The scope of the present invention is defined by the terms of the claims rather than the description above and is intended to include any modifications within the scope and meaning equivalent to the terms of the claims.

### INDUSTRIAL APPLICABILITY

The present invention can be used in an application for neutralizing a chlorine-based component, and can be used in an application for neutralizing not only a chlorine-based component contained in water or an aqueous medium subjected to disinfection etc. and a chlorine-based component contained in liquid waste but also a chlorine-based component attached to or remaining in apparatuses or equipment and a chlorine-based component which floats and is diffused in air or the like.

## Claims

1. A chlorine neutralizer which neutralizes a chlorine-based component, wherein
the chlorine neutralizer comprises at least one selected from a vinyl alcohol based polymer and a polyamide resin, and
the vinyl alcohol based polymer contains at least vinyl alcohol in a repeating structural unit.

2. The chlorine neutralizer according to claim 1, wherein
the chlorine neutralizer comprises the vinyl alcohol based polymer, and
the vinyl alcohol based polymer contains at least vinyl alcohol in the repeating structural unit.

3. The chlorine neutralizer according to claim 2, wherein
the chlorine-based component is contained in a liquid containing a chlorine-based treatment agent.

4. The chlorine neutralizer according to claim 2 or 3, wherein
the chlorine neutralizer contains at least 30 mass % of the vinyl alcohol based polymer with respect to a total mass of all components of the chlorine neutralizer.

5. The chlorine neutralizer according to any one of claims 2 to 4, wherein
the vinyl alcohol based polymer is one type or two types of an ethylene-vinyl alcohol copolymer and a vinyl alcohol polymer.

6. The chlorine neutralizer according to claim 1, wherein
the chlorine neutralizer comprises the polyamide resin.

7. The chlorine neutralizer according to claim 6, wherein
the chlorine-based component is contained in a liquid containing a chlorine-based treatment agent.

8. The chlorine neutralizer according to claim 6 or 7, wherein
the chlorine neutralizer contains at least 30 mass % of the polyamide resin with respect to a total mass of all components of the chlorine neutralizer.

9. The chlorine neutralizer according to any one of claims 6 to 8, wherein
the polyamide resin is aliphatic polyamide.

10. The chlorine neutralizer according to claim 9, wherein
the aliphatic polyamide is at least one selected from nylon 6 and nylon 6,6.

11. The chlorine neutralizer according to any one of claims 1 to 10, wherein
the chlorine neutralizer is in a form of at least one selected from the group consisting of particles, a film, a porous body, a fiber, a non-woven fabric, a fabric, and a knit.

12. The chlorine neutralizer according to any one of claims 1 to 11, wherein
the chlorine neutralizer is in a form of a sealed body sealed in a case with a hole through which the chlorine-based component can pass.

13. A throw-in type chlorine neutralizer comprising the chlorine neutralizer according to any one of claims 1 to 12.

14. A chlorine neutralizing apparatus comprising the chlorine neutralizer according to any one of claims 1 to 13.

15. The chlorine neutralizing apparatus according to claim 14, wherein
the chlorine neutralizing apparatus is a filtering material or an adsorbent.

16. A chlorine neutralizing method of neutralizing a chlorine-based component, the chlorine neutralizing method comprising:
neutralizing the chlorine-based component by bringing the chlorine-based component and a vinyl alcohol based polymer in contact with each other,
the vinyl alcohol based polymer containing at least vinyl alcohol in a repeating structural unit.

17. The chlorine neutralizing method according to claim 16, wherein
the chlorine-based component and the vinyl alcohol based polymer are brought in contact with each other by exposing the vinyl alcohol based polymer to an environment containing the chlorine-based component or by introducing the chlorine-based component into the vinyl alcohol based polymer.

18. A chlorine neutralizing method of neutralizing a chlorine-based component, the chlorine neutralizing method comprising:
neutralizing the chlorine-based component by bringing the chlorine-based component and a polyamide resin in contact with each other.

19. The chlorine neutralizing method according to claim 18, wherein
the chlorine-based component and the polyamide resin are brought in contact with each other by exposing the polyamide resin to an environment containing the chlorine-based component or by introducing the chlorine-based component into the polyamide resin.
